# EUROPÄISCHE PATENTSCHRIFT

(11) **EP 1 093 426 B1**
(45) Veröffentlichungstag und Bekanntmachung des Hinweises auf die Patenterteilung: **16.10.2002**
(21) Anmeldenummer: 99945938.1
(22) Anmeldetag: 07.07.1999
(51) Int. Cl.: B60R 21/32

(54) **VORRICHTUNG ZUR ÜBERWACHUNG DER VERRIEGELUNGSSTELLUNG EINER VERBINDUNGSEINRICHTUNG ZUR BEFESTIGUNG EINES KINDERSITZES**
DEVICE FOR MONITORING THE LOCKING POSITION OF A CONNECTING DEVICE FOR FIXING A CHILD SEAT
DISPOSITIF POUR SURVEILLER LA POSITION DE VERROUILLAGE D'UN SYSTEME DE RACCORDEMENT D'UN DISPOSITIF POUR FIXER UN SIEGE ENFANT DANS UN VEHICULE

(30) Priorität: 07.07.1998 DE 19830229; 25.02.1999 DE 19908197
(43) Veröffentlichungstag der Anmeldung: 25.04.2001
(73) Patentinhaber: TRW Automotive Electronics & Components GmbH & Co. KG, 78315 Radolfzell (DE)
(72) Erfinder: SKOFLJANEC, Robert, D-78345 Moos-Bankholzen (DE); BORNHORST, Dieter, D-78333 Stockach (DE); LEMCKE, Sören, D-78343 Gaienhofen-Horn (DE)
(74) Vertreter: Eder, Eugen, Dipl.-Ing.
(86) Internationale Anmeldenummer: DE9902101
(87) Internationale Veröffentlichungsnummer: WO00001561

(56) Entgegenhaltungen:
- EP-A- 0 819 566
- US-A- 5 690 356

## Beschreibung

Die Erfindung betrifft eine Vorrichtung zur Überwachung der Verriegelungsstellung einer Verbindungseinrichtung, insbesondere der Verriegelungsstellung einer Einrichtung zur Befestigung eines Kindersitzes in einem Fahrzeug.

Zur Befestigung eines Kindersitzes in einem Kraftfahrzeug sind verschiedene Möglichkeiten bekannt: Der Kindersitz kann zugleich mit dem Kind mit einem im Fahrzeug ohnehin vorhandenen 2-Punkt- oder 3-Punkt-Gurt-System befestigt werden. Des Weiteren ist es bekannt, den Kindersitz zunächst mit zusätzlichen, im Fahrzeug montierten Gurten zu befestigen, wobei das Kind dann mit im Kindersitz integrierten Gurten gehalten wird.

In letzter Zeit wurde von der Kfz-Industrie ein neues Befestigungssystem für Kindersitze entwickelt, bei dem spezielle Kindersitze mit daran vorgesehenen Verriegelungsteilen mit fest im Kraftfahrzeug vorgesehenen Trägerteilen verbunden werden. Beispielsweise können am Kindersitz zwei Arme vorgesehen sein, die jeweils eine stirnseitige Ausnehmung aufweisen, in welche ein U-förmiger Bügel, der fest im Kfz montiert ist, eingreift. Nach dem Einschieben der Arme in die als Bügel ausgebildeten Trägerteile wird der Sitz mit einer jeweils am Arm des Kindersitzes vorgesehenen Arretiereinrichtung arretiert. Dieses Befestigungssystem weist den Vorteil einer schnellen Montagemöglichkeit auf. Zudem wird der Kindersitz fest mit dem Fahrzeug verankert, so dass praktisch keine Gefahr besteht, dass der Kindersitz bei einer Kollision des Kfz aus seiner Verankerung gerissen wird.

Problematisch in Verbindung mit im Fahrzeug befindlichen Kindersitzen, insbesondere auf den Vordersitzen eines Kfz, ist jedoch, dass das Auslösen eines im Fahrzeug vorhandenen Airbag sicher verhindert werden muss. Hierfür wurden verschiedene Systeme entwickelt, beispielsweise Infrarot- oder Ultraschall-Erfassungssysteme, die detektieren, ob im Kfz ein Kindersitz montiert ist oder nicht. Gegebenenfalls wird dann die Zündung eines Airbag verhindert. Derartige Systeme weisen jedoch bisher immer den Nachteil auf, dass eine 100%ige Erkennung nicht gewährleistet wird.

Aus der EP-A-0 819 566 ist ein Kraftfahrzeug mit zumindest einem Fahrzeugsitz bekannt, an dem ein aufgesetzter Kindersitz befestigbar ist, wobei eine Vorrichtung zur Deaktivierung eines vorgelagerten Airbags bei montiertem Kindersitz vorgesehen ist. Die Vorrichtung umfasst einen am Kindersitz befestigten Befestigungsgurt mit einer daran befestigten Steckzunge sowie ein am Fahrzeugsitz befestigtes Gurtschloss, in dem ein Geber integriert ist, wobei durch das Einstecken der Steckzunge in das Gurtschloss ein Signal erzeugt wird, welches zur Deaktivierung des Airbags ausgewertet wird.

Des Weiteren ist aus der US-A-5 690 356 ein Sicherheitssystem gemäß dem Oberbegriff des Anspruchs 1 bekannt, wobei ein Fahrzeugsitz Verankerungsteile zur Befestigung eines Kindersitzes aufweist, an welchen Halteteile des Kindersitzes verriegelbar sind- Das Vorhandensein eines Kindersitzes und ggf. dessen Ausrichtung in bzw. entgegen der Fahrtrichtung wird mittels Endschalter detektiert, die am Fahrzeugsitz in der Nähe der Verankerungsteile angeordnet sind.

Es ist darüber hinaus, insbesondere im Zusammenhang mit Rückhalte-Systemen für Kraftfahrzeuge, bekannt, die Verriegelungsstellung einer Verbindungseinrichtung, insbesondere eines Gurtschlosses eines Rückhaltesystems, zu überwachen. Auch derartige Überwachungssysteme können dazu genutzt werden, um beispielsweise das Zünden eines Airbag zu verhindern, falls sich auf dem betreffenden Sitz, beispielsweise dem Beifahrersitz, keine Person befindet. Dabei wird angenommen, dass sich keine Person auf dem betreffenden Sitz befindet, wenn der Gurt als nicht geschlossen detektiert wird.

Derartige herkömmliche Einrichtungen zur Überwachung der Verriegelungsstellung eines Gurtschlosses weisen meist einen Endschalter auf, welcher von dem zu verriegelnden Teil, das am Gurt befestigt ist, in der Verriegelungsstellung beaufschlagt wird.

Problematisch bei derartigen Überwachungsvorrichtungen ist jedoch, dass Fehlfunktionen nicht erkennbar sind. Beispielsweise kann nicht unterschieden werden, ob das Gurtschloss nicht verriegelt ist, oder ob der Einschalter defekt ist und der Kontakt trotz der Verriegelung des Gurtschlosses nicht geschlossen wurde.

Hierzu hat die Anmelderin in der nicht veröffentlichten deutschen Patentanmeldung 198 30 229 eine Vorrichtung zur Überwachung der Verriegelungsstellung einer Verbindungsvorrichtung, insbesondere zur Überwachung der Verriegelungsstellung eines Gurtschlosses für Kfz, beschrieben, welche auf einfache Weise hinsichtlich der wesentlichen Fehlermöglichkeiten überwachbar ist und welche auf einfache Weise in die Konstruktion bekannter Verbindungsvorrichtungen integrierbar ist.

Der Kern dieser Überwachungsvorrichtung bzw. Überwachungseinrichtung besteht darin, dass beim Verbinden des Verriegelungsteils und des Trägerteils der Verbindungsvorrichtung zwei Positionen erfasst werden. Während des Verbindens wird wenigstens eine bewegbare Marke aus einer ersten in eine zweite Endposition bewegt. Mit einer ersten und einer zweiten Sensoreinrichtung wird jeweils das Vorhandensein oder Nichtvorhandensein der Marke in der ersten und zweiten Endposition detektiert. Auf diese Weise ist es möglich, nicht nur die Endstellung, also die Verriegelungsstellung der zu überwachenden Verbindungsvorrichtung zu kontrollieren, sondern eine bestimmte Phase des Verbindungsvorgangs. Beispielsweise ist bei dieser Vorrichtung erkennbar, falls eine der beiden Sensoreinrichtungen ausgefallen ist. Auch ist erkennbar, ob die zu detektierende Marke zerstört wurde.

Ausgehend von diesem Stand der Technik liegt der vorliegenden Erfindung die Aufgabe zugrunde, eine Vorrichtung zur Überwachung der Verriegelungsstellung einer Verbindungseinrichtung, insbesondere der Verriegelungsstellung einer Einrichtung zur Befestigung eines Kindersitzes in einem Fahrzeug zu schaffen, welche auf einfache Weise in einem Fahrzeug auf einem bereits vorhandenen Trägerteil der Verbindungseinrichtung montierbar ist und auf einfache Weise hinsichtlich der wesentlichen Fehlermöglichkeiten überwachbar ist.

Die Erfindung löst diese Aufgabe mit den Merkmalen des Patentanspruchs 1.

Die Erfindung geht von der Erkenntnis aus, dass die wesentliche Fehlermöglichkeit der Vorrichtungen nach dem Stand der Technik bei der Verwendung von Endschaltern darin besteht, dass trotz eines Betätigens des Endschalters der Kontakt, beispielsweise infolge eines Verschleißes der Kontaktelemente, nicht korrekt geschlossen wird.

Um diese Funktionsstörung zu erkennen, werden bei der vorliegenden Erfindung nicht nur die verriegelte Endstellung oder Verriegelungsstellung eines im Grundkörper der Vorrichtung angeordneten Schiebers überwacht, sondern zusätzlich wenigstens eine weitere, von der Verriegelungsstellung beabstandete Stellung des Schiebers. Hierdurch wird die Funktionssicherheit der Überwachungsvorrichtung drastisch verbessert. Beispielsweise kann der Ausfall der Detektionsmöglichkeit in der Verriegelungsstellung als Folge eines Ausfalls der betreffenden Sensoreinrichtung dadurch erkannt werden, dass bei einem Verbinden der Teile der Verbindungseinrichtung der Schieber auch in der von der Verriegelungsstellung beabstandeten Stellung erfasst wird. In umgekehrter Weise kann selbstverständlich auch der Ausfall der Sensoreinrichtung zur Erfassung der weiteren Verriegelungsstellung erkannt werden, falls bei einem Verbinden der Teile der Verbindungseinrichtung lediglich die Verriegelungsstellung detektiert wird, nicht jedoch das Vorhandensein des Schiebers in der weiteren Verriegelungsstellung.

In gleicher Weise wird bei der erfindungsgemäßen Vorrichtung das Erzeugen eines Fehlersignals "keine Verriegelung" nur für den Fall ermöglicht, falls auch tatsächlich versucht wurde, eine Verriegelung herbeizuführen. Zur Erkennung des Verriegelungsversuchs dient dabei das Erfassen des Schiebers in der wenigstens einen weiteren, von der Verriegelungsstellung beabstandeten Stellung bzw. das Herausbewegen des Schiebers aus dieser Stellung. Dagegen war es bei bekannten Überwachungsvorrichtungen mit Endschaltern nur möglich, ein dauerndes Fehlersignal "keine Verriegelung" zu erzeugen, beispielsweise vom Einschalten der Zündung des Fahrzeugs bis zu einem tatsächlichen Verriegeln der Verbindungseinrichtung. Derartige Systeme wurden beispielsweise in Verbindung mit Rückhaltesystemen verwirklicht, wobei es sich jedoch in der Praxis als störend herausstellte, dass das Fehlersignal dauernd erzeugt wurde, unabhängig davon, ob die Bedienperson tatsächlich eine Verriegelung herbeiführen wollte oder nicht.

Nach der bevorzugten Ausführungsform der Erfindung ist der Grundkörper der Überwachungsvorrichtung mit dem Trägerteil der Verbindungseinrichtung verrastbar oder verschraubbar ausgebildet. Hierdurch ergibt sich eine sehr einfache Montage der Überwachungsvorrichtung. Auch eine einfache Nachrüstmöglichkeit ist hierdurch gewährleistet.

Nach einer Ausführungsform der Erfindung weist der Grundkörper der Überwachungsvorrichtung einen Führungsbereich für das Verriegelungsteil auf, der einen Einschubkanal für das Verriegelungsteil definiert.

Diese Ausführungsform ist insbesondere für den Fall vorgesehen, dass die Trägerteile der Verbindungseinrichtung nicht sichtbar bzw. schwer zugänglich sind. Beispielsweise können die Trägerteile von außen nicht sichtbar im Spalt eines Kfz-Sitzes zwischen Sitzfläche und Rückenlehne vorgesehen sein. Der Führungsbereich ist dabei vorzugsweise so ausgebildet, dass er im Wesentlichen bis in den Spalt zwischen Sitzfläche und Rückenlehne reicht, so dass die Verriegelungsteile der Verbindungseinrichtung, beispielsweise des Kindersitzes, einfach in die nunmehr sichtbaren Öffnungen der Führungsbereiche eingeschoben werden können. Der durch die Führungsbereiche definierte Einschubkanal ermöglicht ein einfaches Einschieben der Verriegelungsteile bis in die verriegelte Stellung.

Bei dieser Ausführungsform der Erfindung können in den Seitenwandungen des Einschubkanals Rastausnehmungen zur Aufnahme des Trägerteils der Verbindungseinrichtung vorgesehen sein. Hierdurch kann die Überwachungsvorrichtung einfach dadurch montiert werden, dass der Grundkörper bzw. der Führungsbereich mit den darin vorgesehenen Rastausnehmungen auf das Verriegelungsteil aufgeklippst wird.

Diese Ausführungsform mit Führungsbereich kann auch mit an sich bekannten Detektionseinrichtungen verwendet werden, die nur die Verriegelungsstellung überwachen, auch in Kombination mit weiteren vor- und nachstehend erläuterten Merkmalen.

Nach einer Ausführungsvorrichtung der Erfindung ist der vom Verriegelungsteil beaufschlagbare Bereich des Schiebers in der Richtung senkrecht zur Richtung der Verriegelungsbewegung so ausgebildet, dass er sich im Wesentlichen über die gesamte Breite des Trägerteils, zumindest jedoch über die Breite des Einschubkanals im Bereich des Trägerteils erstreckt. Hierdurch wird verhindert, dass insbesondere bei relativ schmal ausgebildeten Verriegelungsteilen der Schieber während des Verbindungsvorgangs nicht betätigt oder beschädigt wird.

Bei der bevorzugten Ausführungsform der Erfindung sind im oder am Schieber ein oder mehrere Magnete vorgesehen, die von der Detektionseinrichtung, beispielsweise mittels Hall-Elementen erfasst werden.

Des Weiteren erfasst bei der bevorzugten Ausführungsform der Erfindung die Detektionseinrichtung sowohl die Ausgangsstellung als auch die Endstellung des Schiebers. Durch das Erfassen der Ausgangsstellung ist die Funktionsfähigkeit der Überwachungsvorrichtung bzw. der Sensoreinrichtung zur Überwachung der Ausgangsstellung dauernd überprüfbar.

Bei der bevorzugten Ausführungsform der Erfindung erzeugt die Detektionseinrichtung zumindest ein erstes und ein zweites, von Null verschiedener elektrisches Signal, wobei das erste elektrische Signal der Ausgangsstellung oder einem Ausgangsstellungbereich des Schiebers und das zweite elektrische Signal der Endstellung oder einem Endstellungsbereich des Schiebers entspricht. Durch einen Vergleich dieser Signale mit vorgegebenen Sollwerten oder Sollwertbereichen ist daher sowohl die Funktionsfähigkeit der Vorrichtung, als auch die Stellung des Schiebers und damit insbesondere die korrekte Verriegelungsstellung erkennbar. Selbstverständlich kann die Detektionseinrichtung auch so ausgebildet sein, dass eine weitere Auswertung dieser Signale zu mehreren "Funktions-Signalen" oder "Fehler-Signalen" erfolgt. Beispielsweise kann bei der detektierten Ausgangsstellung und nicht-detektierten Verriegelungsstellung ein "betriebsbereit"-Signal erzeugt werden. Ebenso kann bei Nicht-detektieren der Ausgangsstellung und gleichzeitigem Nicht-detektieren der Verriegelungsstellung ein "Nicht-Verriegelungs-Signal" als Fehlersignal erzeugt werden.

Nach der bevorzugten Ausführungsform kann die Detektionseinrichtung ein drittes elektrisches Signal erzeugen für den Fall, dass sich der Schieber zwischen der Ausgangsstellung und der Verriegelungsstellung bzw. entsprechenden Bereichen befindet. Dies kann entweder durch das Vorsehen einer weiteren Sensorvorrichtung geschehen, oder automatisch für den Fall, dass keine der Sensoreinrichtungen für die Ausgangs- und Verriegelungsstellung die betreffende Marke des Schiebers erfasst. Selbstverständlich kann auch dieses dritte elektrische Signal, ggf. durch Verknüpfung mit den beiden anderen Signalen, wieder von der Detektionseinrichtung zu "Funktions-Signalen" oder "Fehler-Signalen" weiterverarbeitet werden.

Weitere Auführungsformen der Erfindung ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: eine schematische perspektivische Darstellung eines Kindersitzes mit einer Verbindungseinrichtung zur Montage des Kindersitzes in einem Fahrzeug;
- Fig. 2: eine perspektivische Darstellung einer ersten Ausführungsform der Überwachungsvorrichtung nach der Erfindung;
- Fig. 3: schematische Schnittdarstellungen der Ausführungsform nach Fig. 2 in Verbindung mit der Verbindungseinrichtung nach Fig. 1, (Fig. 3a: eingeschobenes Verriegelungsteil beaufschlagt den Schieber der Überwachungsvorrichtung in Ausgangsstellung; Fig. 3b: eingeschobenes Verriegelungsteil beaufschlagt den Schieber der Überwachungsvorrichtung in der Verriegelungsstellung);
- Fig. 4: ein schematische Schnittdarstellung der Ausführungsform in Fig. 2 in Verbindung mit der Verbindungseinrichtung in Fig. 1 mit einem abgewandelten Verriegelungsteil, dargestellt in der Verriegelungsstellung und
- Fig. 5: eine weitere Ausführungsform der Überwachungsvorrichtung nach der Erfindung in perspektivischer Darstellung (Fig. 5a: montierter Grundkörper der Überwachungsvorrichtung mit Detektionseinrichtung und Verriegelungsteil in Verriegelungsstellung; Fig. 5b: wie Fig. 5a zusätzlich jedoch mit montiertem Schieber).

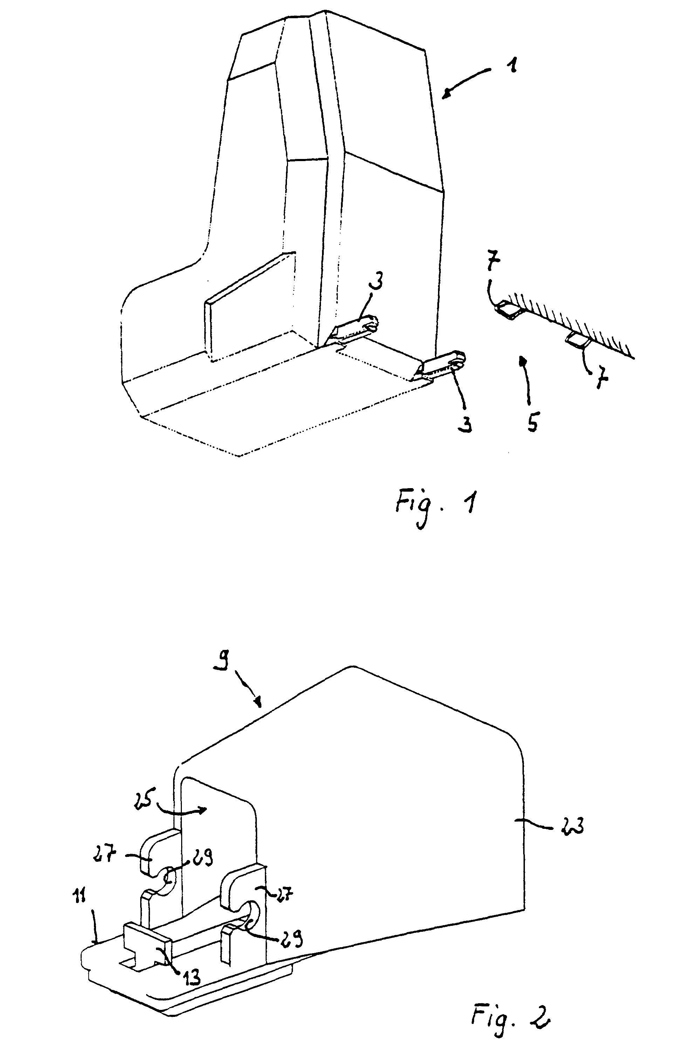

Fig. 1 zeigt einen Kindersitz 1, welcher im unteren rückwärtigen Bereich der Sitzschale zwei Verriegelungsteile 3 einer Verbindungseinrichtung 5 aufweist, die über die Rückwandung des Sitzes 1 hinausragen. Die Verbindungseinrichtung 5 umfasst neben den Verriegelungsteilen 3 zwei Trägerteile 7, die fest im Fahrzeug montiert sind. In einer nicht näher dargestellten Ausführungsform der Erfindung können die Trägerteile 7 auch so im Fahrzeug angeordnet sein, dass sie aus einer Ruhestellung in eine Arbeitsstellung, die der in Fig. 1 dargestellten Position entspricht, ausgeschwenkt werden können. Selbstverständlich müssen auch bei dieser Ausführungsform die Trägerteile 7 so ausgebildet sein, dass sie eine ausreichende Befestigung des Kindersitzes durch das Verriegeln der Verriegelungsteile 3 mit den Trägerteilen 7 gewährleisten. Die Trägerteile 7 können im Fahrzeug so vorgesehen sein, dass sie durch den Spalt zwischen der Sitzfläche eines nicht näher dargestellten Fahrzeugsitzes und dessen Rückenlehne zugänglich sind. Für den Fall, dass die Trägerteile aus einer Ruhestellung in eine Arbeitsstellung ausschwenkbar sind, können die Trägerteile nach dem Ausschwenken in die Arbeitsstellung auch aus dem Spalt zwischen Sitzfläche und Rückenlehne herausragen. Im Fall einer unbeweglich im Kfz fixierten Montage der Trägerteile sind diese vorzugsweise im Spalt zwischen Sitzfläche und Rückenlehne des Kfz-Sitzes versenkt. Für diese beiden Anwendungsfälle eignen sich die beiden unterschiedlichen Grundprinzipien der nachstehend näher erläuterten Überwachungsvorrichtung.

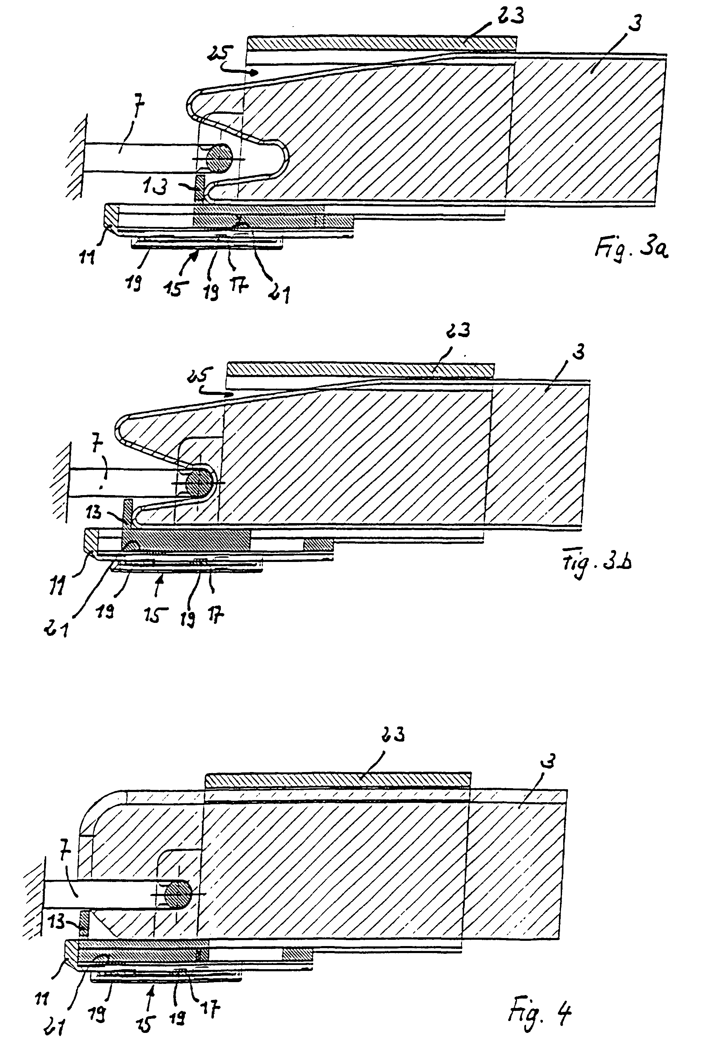

Die in Fig. 2 dargestellte erste Ausführungsform einer Überwachungsvorrichtung 9 weist einen Grundkörper 11 auf, in welchem ein Schieber 13 vorgesehen ist. Der Schieber 13 ist im Grundkörper 11 verschiebbar geführt. Die Position des Schiebers entlang seiner Schiebebahn wird durch eine Detektionseinrichtung 15 erfasst.

Die Detektionseinrichtung 15 umfasst einerseits eine an der Unterseite des Grundkörpers 11 vorgesehene Elektronik 17, welche zwei Hall-Sensoren 19 umfasst, welche die Position zumindest eines an der Unterseite des Schiebers 13 vorgesehenen magnetischen Elements 21 erfassen.

Das eine der beiden Hall-Elemente ist dabei, wie aus Fig. 3a ersichtlich, so positioniert, dass dieses die Ausgangsstellung des Schiebers 13 detektiert. Die Elektronik 17 kann somit erfassen, ob sich der Schieber 13 in der Ausgangsstellung befindet oder durch die Beaufschlagung des Verriegelungsteils 3 aus der Ausgangsposition (Fig. 3a) herausbewegt wird.

Anstelle eines einzigen magnetischen Elements können auch mehrere, beispielsweise zwei magnetische Elemente vorgesehen sein. Z.B. können zwei Sensoreinrichtungen in der Einschubrichtung parallel versetzt zueinander vorgesehen sein. Diese können dann jeweils ein magnetisches Element erfassen, wobei die beiden Elemente ebenfalls versetzt zueinander im Schieber angeordnet sind.

Auch ist es selbstverständlich möglich die Sensoreinrichtungen zur Erfassung der Marken im Schieber vorzusehen und die Marken im Grundkörper der Überwachungsvorrichtung.

Selbstverständlich kann die Position des Schiebers in den wenigstens zwei Stellung auch auf jede andere Art, beispielsweise mit induktiven oder kapazitiven Sensoreinrichtungen oder mit optischen Sensoreinrichtungen wie Lichtschranken oder dergleichen erfasst werden.

Um ein einfaches Einschieben und Montieren der Verriegelungsteile 3 mit den Trägerteilen 7 für den Fall zu ermöglichen, in dem die Trägerteile 7 versenkt im Spalt zwischen der Sitzfläche und der Rückenlehne des Kfz-Sitzes angeordnet sind, weist die in den Fig. 2 bis 4 dargestellte Auführungsform der Erfindung einen Führungsbereich 23 auf, der einen Einschubkanal 25 für das Verriegelungsteil 3 definiert. Der Führungsbereich 23 ist dabei, wie in Fig. 2 dargestellt, vorzugsweise so ausgebildet, dass sich der Einschubkanal 25 in der horizontalen Querrichtung (bezogen auf die Einschubbewegung des Verriegelungsteils 3) in Richtung auf den Schieber 13 verjüngt. Hierdurch wird ein einfaches Einschieben der Verriegelungsteile 3 in die Führungsbereiche 23 der Überwachungsvorrichtungen 9 gewährleistet. Zudem wird eine Zerstörung der Führungsbereiche 23 bei einem verkanteten Einschieben der Verriegelungsteile 3 verhindet.

Bei der in Fig. 2 dargestellten Ausführungsform sind an den Führungsbereichen 23 an den dem Schieber 13 zugewandten Stirnseiten der Seitenwandungen Rastbereiche 27 ausgebildet, in welchen Rastausnehmungen 29 vorgesehen sind. Die Rastausnehmungen 29 dienen zur Aufnahme der quer verlaufenden Bereiche der U-förmig ausgebildeten Trägerteile 7. Damit kann die Montage der Überwachungsvorrichtung 9 sehr einfach dadurch geschehen, dass diese mit den Rastausnehmungen 29 auf das betreffende Trägerteil 7 aufgeklippst wird. Zudem ermöglicht diese Montage eine Schwenkbewegung der Überwachungsvorrichtung 9 um die Achse des vorderen Bereichs des betreffenden Trägerteils 7. Hierdurch wird eine Zerstörung der Überwachungsvorrichtung bei einem Einschieben der Verriegelungsteile 3 aus unterschiedlichen Winkeln (in einer Vertikalebene zu den vorderen Bereichen der Trägerteile 7) verhindert, da die Überwachungsvorrichtung mitverschwenkt wird.

Wie in den Fig. 3a und 3b dargestellt, wird der Schieber 13 nach dem Beaufschlagen durch das Verriegelungsteil 3 in der Ausgangsstellung und das weitere Einschieben des Verriegelungsteils 3 in den Einschubkanal 25 des Führungsbereichs 23 bis in die betreffende Endstellung bewegt (Fig. 3b).

Das zweite Hall-Element ist dabei so positioniert, dass es in der Endstellung das am Schieber 13 vorgesehene magnetische Element 21 erfassen kann. Hierzu muss sich das magnetische Element 21 selbstverständlich so nah am zweiten Hall-Element 19 befinden, dass sich ― bei der gegebenen Signalverstärkung ― ein detektierbares Signal ergibt. Der "Erfasst"-Zustand kann dann von der Elektronik bei Überschreiten eines bestimmten Signalpegels detektiert werden.

Bei der in Fig. 3a und 3b dargestellten Ausführungsform des Verriegelungsteils 3 handelt es sich um eine von der dargestellten Überwachungsvorrichtung gerade noch korrekt detektierbare "Minimal-Kontur".

Bei dieser "Minimal-Kontur" des Verriegelungsteils 3 ergibt sich die in Fig. 3b dargestellte Endstellung des Schiebers 3 bei dem mit dem Trägerelement 7 verriegelten Verriegelungsteil 3. An dieser Stelle sei darauf hingewiesen, dass die eigentliche Verriegelungsmechanik, welche die Arretierung des Verriegelungsteils 3 mit dem Trägerteil 7 gewährleistet, in der Zeichnung nicht dargestellt ist, da diese Funktion für die vorliegende Erfindung unerheblich ist. Bei dieser Mechanik kann es sich um übliche Verriegelungsmechanismen handeln, die beim Einschieben des Trägerteils 7 in die Ausnehmung des Verriegelungsteils 3 bis zum Anschlag selbsttätig verriegeln und für das Lösen eine manuelle Entriegelungsvorrichtung beinhalten.

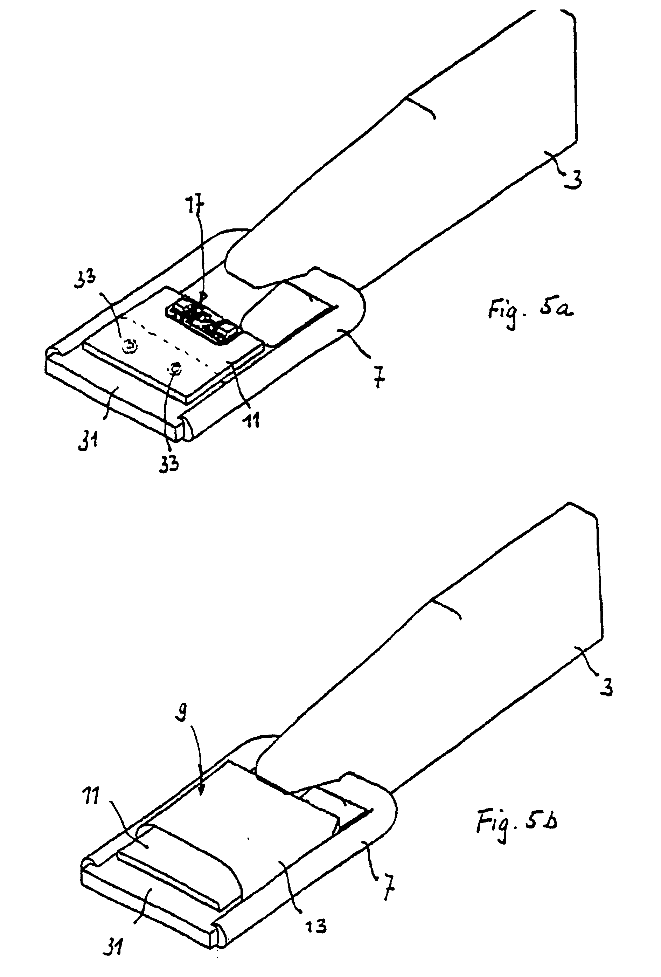

Fig. 4 zeigt wiederum die Überwachungsvorrichtung gemäß Fig. 2, jedoch in Verbindung mit einem Verriegelungsteil 3, welches der vor der dargestellten Ausführungsform gerade noch detektierbaren "Maximal-Kontur" entspricht. Sowohl bei der "Minimal-Kontour" als auch der "Maximal-Kontour" ist insbesondere derjenige Arm seitlich der das Trägerteil aufnehmenden Ausnehmung von Bedeutung, der den Schieber beaufschlagt. Wie aus Fig. 4 ersichtlich, muss der Schieber 13 der Überwachungsvorrichtung 9 so ausgebildet sein, dass er zum einen beim Einschieben der Maximal-Kontur bis in die Verriegelungsstellung einen ausreichenden Verschiebeweg gewährleistet und zum anderen muss auch in dieser maximalen Endstellung ein Detektieren des magnetischen Elements 21 durch das zweite Hall-Element 19 möglich sein.

Gemäß den Fig. 3b und 4 kann dies dadurch gelöst werden, dass die Länge des magnetischen Elements 21 (in Einschubrichtung) bei gegebener Länge des Hall-Elements 19 so gewählt ist, dass sowohl in der minimalen Endstellung (Fig. 3b) als auch in der maximalen Endstellung (Fig. 4) ein sicheres Detektieren möglich ist. Beispielsweise kann die Länge und Position des magnetischen Elements 21 so gewählt sein, dass sich mit der Minimal-Kontur des Verriegelungsteils 3 gerade eine volle Überlappung von Hall-Element und magnetischem Element (in dessen vorderem Bereich) und mit der Maximal-Kontur des Verriegelungsteils 3 gerade noch eine volle Überlappung von magnetischem Teil 21 und Hall-Element 19 (in dessen rückwärtigem Bereich) ergibt.

In diesem Fall kann es erforderlich sein, dass das tatsächliche Verriegeln der Verriegelungsmechanik des Verriegelungsteils 3 noch zusätzlich angezeigt wird, beispielsweise am Sitz selbst.

Selbstverständlich ist es jedoch möglich, das magnetische Element 21 und das Hall-Element 19 mechanisch und elektrisch so zu dimensionieren, dass ein "Verriegelungs-Signal" nur dann erzeugt wird, wenn das Verriegelungsteil 3 tatsächlich auch bis zum Anschlag auf das Trägerteil 7 aufgeschoben wurde und demzufolge auch ein sicheres Verriegeln der Verriegelungsmechanik erfolgt. Hierbei ist jedoch eine Anpassung an die spezielle Kontur des Verriegelungsteils erforderlich.

Fig. 5 zeigt in schematischer perspektivischer Darstellung eine weitere Ausführungsform einer erfindungsgemäßen Überwachungsvorrichtung 9, welche insbesondere für Anwendungsfälle geeignet ist, in denen die Trägerteile 7 sichtbar und/oder leicht zugänglich sind. Im dargestellten Ausführungsbeispiel weist das Trägerteil 7, wie im Fall der ersten Ausführungsform, einen U-förmigen Bügel auf, wobei jedoch zusätzlich in dessen rückwärtigem Bereich eine Montageplatte 31 fest mit dem Bügel verbunden ist. Wie bereits vorstehend erwähnt, kann die Montageplatte 31 dazu dienen, um das Trägerteil 7 in der Ebene der Montageplatte aus einer Ruhestellung in eine Arbeitsstellung zu schwenken.

Die in den Fig. 5a und 5b dargestellte Ausführungsform der Überwachungsvorrichtung 9 umfasst einen Grundkörper 11, welcher mit der Montageplatte 31 des Trägerteils 7 verbindbar ist. Der Grundkörper kann im Wesentlichen in Form einer Platte ausgebildet sein, wobei die Platte als kunststoffumspritztes Stanzgitter ausgebildet sein kann, auf welchem gleichzeitig die Elektronik 17 aufgebaut ist. Selbstverständlich kann die Elektronik auch in üblicher Weise auf einer gedruckten Platine oder unter Verwendung der MID-Technik durch das Aufbringen metallisierter Bereiche, die die Leiterbahnen darstellen, realisiert werden. Der Grundkörper 11 kann an seiner Unterseite, wie in Fig. 5a schematisch angedeutet, zwei Rastzapfen 33 aufweisen, mit welchen der Grundkörper in entsprechende Ausnehmungen in der Montageplatte 31 eingeklippst werden kann. Selbstverständlich kann jedoch auch eine Schraubverbindung oder eine anders ausgebildete mechanische Verbindung vorgesehen sein. Bei der Ausführungsform gemäß Fig. 5 ist ein Schieber 13 vorgesehen, der auf dem plattenförmigen Grundkörper 11 verschiebbar geführt ist. Hierzu kann der Grundkörper beispielsweise etwas schmäler ausgebildet sein, als der Innenraum des U-förmigen Trägerteils 7. Der Schieber kann sich dann im Wesentlichen über die volle Breite des Grundkörpers 11 erstrecken und mit seinen Seitenwandungen mittels der Seitenwandungen des Grundkörpers 11 verschiebbar geführt sein. Hierzu können beispielsweise an den Innenwandungen der Seitenwandungen des Schiebers 13 Führungsnuten vorgesehen sein. Selbstverständlich kann die Führung des Schiebers 13 jedoch auch auf andere Weise erfolgen. Der Schieber 13 bildet in der Ausführungsform nach Fig. 5 somit gleichzeitig eine Abdeckung der Elektronik 17. Die Wahl des Verschiebungsbereichs und die Detektion der Stellung des Schiebers 13 kann analog zu der in den Fig. 2 bis 4 dargestellten Ausführungsformen erfolgen und wird daher an dieser Stelle nicht nochmals erläutert. Fig. 5 zeigt die Endstellung im Fall der in diesem Beispiel verwendeten "Minimal-Kontur" des Verriegelungsteils 3. Abschließend sei nochmals darauf hingewiesen, dass der Schieber 13 selbstverständlich mittels federnder Elemente in die Ausgangsstellung zurückbewegt werden kann.

Im Hinblick auf die Auswerteelektronik sei darauf verwiesen, dass diese in der nicht vorveröffentlichten deutschen Patentanmeldung 198 30 229 in mehreren Ausführungsformen detailliert beschrieben ist.

## Patentansprüche

1. Vorrichtung zur Überwachung der Verriegelungsstellung einer Einrichtung zur Befestigung eines Kindersitzes in einem Fahrzeug,
**gekennzeichnet durch**
a) einen Grundkörper (11), welcher mit einem mit einem Verriegelungsteil (3) verriegelbaren Trägerteil (7) verbindbar ausgebildet ist,
b) einen im oder auf dem Grundkörper (11) angeordneten Schieber (13), welcher im mit dem Trägerteil (7) verbundenen Zustand des Grundkörpers bei einem Überführen des Verriegelungsteils (3) in die Verriegelungsstellung vom Verriegelungsteil beaufschlagbar und aus einer Ausgangsstellung in eine der Verriegelungsstellung entsprechende Endstellung verschiebbar ist,
c) und eine im oder am Grundkörper (11) vorgesehenen Detektionseinrichtung (15) für das Detektieren der korrekten Verriegelungsstellung des Verriegelungsteils (3) und des Trägerteils (7) **durch** die Erfassung der Position des Schiebers (13),
d) wobei die Detektionseinrichtung (15) zusätzlich zur Verriegelungsstellung wenigstens eine weitere, von der Verriegelungsstellung beabstandete Stellung des Schiebers (13) erfasst.

2. Vorrichtung nach Anspruch 1, **dadurch gekennzeichnet, dass** der Grundkörper (11) mit dem Trägerteil (7) verrastbar oder verschraubbar ausgebildet ist.

3. Vorrichtung nach Anspruch 1 oder 2, **dadurch gekennzeichnet, dass** der Grundkörper (11) einen Führungsbereich (23) für das Verriegelungsteil (3) aufweist, der einen Einschubkanal (25) für das Verriegelungsteil (3) definiert.

4. Vorrichtung nach Anspruch 3, **dadurch gekennzeichnet, dass** sich der Einschubkanal (25) in Richtung auf das Trägerteil (7) verjüngt.

5. Vorrichtung nach Anspruch 3 oder 4, **dadurch gekennzeichnet, dass** der Führungsbereich (23) mit dem Grundkörper (11) verbindbar, vorzugsweise verrastbar ist.

6. Vorrichtung nach einem der Ansprüche 3 bis 5, sofern diese auch auf Anspruch 2 rückbezogen sind, **dadurch gekennzeichnet, dass** in den Seitenwandungen des Führungsbereichs (23) Rastausnehmungen (29) zur Aufnahme des Trägerteils (7) vorgesehen sind.

7. Vorrichtung nach einem der vorhergehenden Ansprüche, **dadurch gekennzeichnet, dass** sich der vom Verriegelungsteil (3) beaufschlagbare Bereich des Schiebers (13) in der Richtung senkrecht zu Richtung der Verriegelungsbewegung über im Wesentlichen die gesamte Breite des Trägerteils (7), zumindest jedoch über die Breite des Einschubkanals (25) im Bereich des Trägerteils (7) erstreckt.

8. Vorrichtung nach einem der vorhergehenden Ansprüche, **dadurch gekennzeichnet, dass** im oder am Schieber (13) ein oder mehrere magnetische Elemente (21) vorgesehen sind, die von der Detektionseinrichtung (15) erfasst werden.

9. Vorrichtung nach einem der vorhergehenden Ansprüche, **dadurch gekennzeichnet, dass** die Detektionseinrichtung (15) sowohl die Ausgangsstellung als auch die Endstellung des Schiebers (13) erfasst.

10. Vorrichtung nach Anspruch 9, **dadurch gekennzeichnet, dass** die Detektionseinrichtung (15) zumindest ein erstes und ein zweites, von Null verschiedenes elektrische Signal erzeugt, wobei das erste elektrische Signal der Ausgangsstellung oder einem Ausgangsstellungsbereich des Schiebers (13) und das zweite elektrische Signal der Endstellung oder einem Endstellungsbereich des Schiebers entspricht.

11. Vorrichtung nach Anspruch 10, **dadurch gekennzeichnet, dass** die Detektionseinrichtung (15) ein drittes elektrisches Signal erzeugt, das dem Positionsbereich des Schiebers (13) zwischen der Ausgangsstellung oder dem Ausgangsstellungsbereich und der Endstellung oder dem Endstellungsbereich entspricht.

## Claims

1. Device for monitoring the locking position of a device for fixing a child seat in a vehicle,
**characterized by**
a) a basic body (11), which is formed in such a way that it can be connected to a carrier part (7) which can be locked by a locking part (3),
b) a slide (13), which is arranged in or on the basic body (11) and, in the state in which the basic body is connected to the carrier part (7), can be acted on by the locking part when the locking part (3) is transferred into the locking position and can be displaced from a starting position into an end position corresponding to the locking position,
c) and a detection device (15), provided in or on the basic body (11), for detecting the correct locking position of the locking part (3) and the carrier part (7) by sensing the position of the slide (13),
d) the detection device (15) sensing in addition to the locking position at least one further position of the slide (13), at a distance away from the locking position.

2. Device according to Claim 1, **characterized in that** the basic body (11) is formed such that it can be latched or screwed to the carrier part (7).

3. Device according to Claim 1 or 2, **characterized in that** the basic body (11) has a guiding region (23) for the locking part (3), which defines a push-in channel (25) for the locking part (3).

4. Device according to Claim 3, **characterized in that** the push-in channel (25) tapers in the direction of the carrier part (7).

5. Device according to Claim 3 or 4, **characterized in that** the guiding region (23) can be connected, preferably can be latched, to the basic body (11).

6. Device according to one of Claims 3 to 5, in so far as they are related back to Claim 2, **characterized in that** latching clearances (29) for receiving the carrier part (7) are provided in the side walls of the guiding region (23).

7. Device according to one of the preceding claims, **characterized in that** the region of the slide (13) which can be acted on by the locking part (3) extends in the direction perpendicular to the direction of the locking movement over substantially the entire width of the carrier part (7), but at least over the width of the push-in channel (25) in the region of the carrier part (7).

8. Device according to one of the preceding claims, **characterized in that** one or more magnetic elements (21), which are sensed by the detection device (15), are provided in or on the slide (13).

9. Device according to one of the preceding claims, **characterized in that** the detection device (15) senses both the starting position and the end position of the slide (13).

10. Device according to Claim 9, **characterized in that** the detection device .(15) generates at least a first and a second electrical signal, differing from zero, the first electrical signal corresponding to the starting position or a starting position range of the slide (13) and the second electrical signal corresponding to the end position or an end position range of the slide.

11. Device according to Claim 10, **characterized in that** the detection device (15) generates a third electrical signal, which corresponds to the positional range of the slide (13) between the starting position or the starting position range and the end position or the end position range.

## Revendications

1. Dispositif pour surveiller la position de verrouillage d'un système de fixation d'un siège pour enfant dans un véhicule, **caractérisé par** :
a) un corps de base (11) apte à être relié à un support (7) pouvant être verrouillé avec un organe de verrouillage (3),
b) un élément coulissant (13) agencé dans ou sur le corps de base (11), qui, dans la situation où le corps de base est relié au support (7), peut être sollicité par l'organe de verrouillage lors d'un transfert de l'organe de verrouillage (3) jusque dans la position verrouillée et qui peut être déplacé d'une position de départ jusque dans une position finale correspondant à la position de verrouillage,
c) et un organe de détection (15) prévu dans ou contre le corps de base (11) pour détecter la position de verrouillage correcte de l'organe de verrouillage (3) et du support (7) par détection de la position de l'élément coulissant (13),
d) dans lequel l'organe de détection (15) détecte, en supplément à la position de verrouillage, au moins une autre position de l'élément coulissant (13) distante de la position de verrouillage.

2. Dispositif selon la revendication 1, **caractérisé en ce que** le corps de base (11) est apte à être enclenché ou vissé dans le support (7).

3. Dispositif selon l'une ou l'autre des revendications 1 et 2, **caractérisé en ce que** le corps de base (11) comprend une zone de guidage (23) pour l'organe verrouillage (3), qui définit un canal d'introduction (25) pour l'organe de verrouillage (3).

4. Dispositif selon la revendication 3, **caractérisé en ce que** le canal d'introduction (25) se rétrécit en direction du support (7).

5. Dispositif selon l'une ou l'autre des revendications 3 et 4, **caractérisé en ce que** la zone de guidage (23) est susceptible d'être reliée au corps de base (11), de préférence par enclenchement.

6. Dispositif selon l'une des revendications 3 à 5 prises en dépendance de la revendication 2, **caractérisé en ce que** des évidements d'arrêt (29) pour recevoir le support (7) sont prévus dans les parois latérales de la zone de guidage (23).

7. Dispositif selon l'une des revendications précédentes, **caractérisé en ce que** la zone de l'élément coulissant (13) susceptible d'être sollicitée par l'organe de verrouillage (3) s'étend en direction perpendiculaire à la direction du mouvement de verrouillage sensiblement sur toute la largeur du support (7), et au moins sur la largeur du canal d'introduction (25) au niveau du support (7).

8. Dispositif selon l'une des revendications précédentes, **caractérisé en ce qu'**un ou plusieurs éléments magnétiques (21) sont prévus dans ou contre l'élément coulissant (13), et sont détectés par l'organe de détection (15).

9. Dispositif selon l'une des revendications précédentes, **caractérisé en ce que** l'organe de détection (15) détecte aussi bien la position de départ que la position finale de l'élément coulissant (13).

10. Dispositif selon la revendication 9, **caractérisé en ce que** l'organe de détection (15) produit au moins un premier et un deuxième signal électrique non nul, le premier signal électrique correspondant à la position de départ ou à une plage de position de départ de l'élément coulissant (13), et le deuxième signal électrique correspond à la position finale ou à une plage de position finale de l'élément coulissant.

11. Dispositif selon la revendication 10, **caractérisé en ce que** l'organe de détection (15) produit un troisième signal électrique qui correspond à la zone de position de l'élément coulissant (13) entre la position de départ ou la plage de position de départ et la position finale ou la plage de position finale.
